# EUROPEAN PATENT SPECIFICATION

(11) **EP 3 111 710 B1**
(45) Date of publication and mention of the grant of the patent: **21.06.2023**
(21) Application number: 14883581.2
(22) Date of filing: 30.06.2014
(51) Int. Cl.: H04B 7/0452, H04W 72/12, H04W 74/08, H04L 1/06, H04L 1/16, H04W 28/06, H04L 1/00

(54) **UPLINK OR DOWNLINK MU-MIMO APPARATUS AND METHOD**
AUFWÄRTS- ODER ABWÄRTSSTRECKEN-MU-MIMO-VORRICHTUNG UND VERFAHREN
PROCÉDÉ ET APPAREIL À ENTRÉES MULTIPLES ET SORTIES MULTIPLES MULTI-UTILISATEURS (MU-MIMO) DE LIAISON MONTANTE OU DE LIAISON DESCENDANTE

(30) Priority: 25.02.2014 US 201461944273 P
(43) Date of publication of application: 04.01.2017
(73) Proprietor: SOLiD, INC., Gyeonggi-do 13493 (KR)
(72) Inventor: LI, Guoqing C., Portland, Oregon 97229 (US); STACEY, Robert J., Portland, Oregon 97214 (US); YIN, Hujun, Saratoga, California 95070 (US)
(74) Representative: Frenkel, Matthias Alexander
(86) International application number: PCT/US2014/044881
(87) International publication number: WO 2015/130335

(56) References cited:
- EP-A2- 2 362 580
- EP-A2- 2 362 580
- WO-A1-2010/118383
- WO-A1-2013/077653
- WO-A2-2011/068387
- US-A1- 2010 220 678
- US-A1- 2010 220 679
- US-A1- 2012 257 567
- US-A1- 2014 010 196
- CATT: "Further discussion on aperiodic feedback", 3GPP DRAFT; R1-123217, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Qingdao, China; 20120813 - 20120817 5 August 2012 (2012-08-05), XP050661109, Retrieved from the Internet: URL:http://www.3gpp.org/ftp/tsg_ran/WG1_RL 1/TSGR1_70/Docs/ [retrieved on 2012-08-05]

## Description

### CLAIM OF PRIORITY

This application claims the benefit of priority to United States Provisional Patent Application Serial No. 61/944,273, filed on February 25, 2014.

### TECHNICAL FIELD

Examples generally relate to systems and methods for Multi-User Multiple Input, Multiple Output (MU-MIMO) or frequency multiplexing support for DownLink (DL) and UpLink (UL). Some embodiments relate to High-Efficiency Wireless (HE-W) Local Area Network (LAN) or High Efficiency Wi-Fi (HEW) and the Institute of Electrical and Electronics Engineers (IEEE) 802.11ax standard. Some embodiments relate to the 802.11ac standard.

### SUMMARY OF THE INVENTION

The invention is defined by the subject-matter of the independent claims. Preferred embodiments are defined in the dependent claims.

### BACKGROUND

MU-MIMO is a form of spatial multiplexing where different spatial streams are directed to or originate from different users. In MU-MIMO, a plurality of wireless devices (e.g., Access Points (Aps)) and transmitter devices are coupled through antennas. Using MU-MIMO multiple transmitters may send separate signals and multiple receivers may receive the separate signals simultaneously and in the same band.

US2010/0220678 describes techniques for aggregating certain frame types in uplink and/or downlink transmit opportunities.

EP2362580 describes space division multiple access for wireless local area network (WLAN), and channel estimation for the same. A frequency division multiple access technique and a space division multiple access technique based on competition are used together for channel access.

### BRIEF DESCRIPTION OF THE DRAWINGS

In the drawings, which are not necessarily drawn to scale, like numerals may describe similar components in different views. Like numerals having different letter suffixes may represent different instances of similar components. The drawings illustrate generally, by way of example, but not by way of limitation, various embodiments discussed in the present document.
FIG. 1 shows a block diagram of an example of a system, according to one or more embodiments.
FIG. 2 shows a block diagram of an example of a UL operation, according to one or more embodiments.
FIG. 3 shows a block diagram of an example of a DL operation, according to one or more embodiments.
FIG. 4 shows a block diagram of an example of UL and DL operations, according to one or more embodiments.
FIG. 5 shows a block diagram of an example of a UL operation, according to one or more embodiments.
FIG. 6 shows a block diagram of an example of a DL operation, according to one or more embodiments.
FIG. 7 shows a block diagram of an example of a multi-sub-channel UL operation, according to one or more embodiments.
FIG. 8 shows a block diagram of an example of a multi-sub-channel UL and DL operation, according to one or more embodiments.
FIG. 9 shows a block diagram of an example of a schedule transmission for a UL operation and a schedule transmission for a DL operation, according to one or more embodiments.
FIG. 10 shows a block diagram of an example of a schedule transmission for both UL and DL operations, according to one or more embodiments.
FIG. 11 shows a block diagram of an example of a schedule transmission, according to one or more embodiments.
FIG. 12 shows a block diagram of an example of a schedule transmission, according to one or more embodiments.
FIG. 13 shows a block diagram of an example of a combined schedule and DL transmission, according to one or more embodiments.
FIG. 14 shows a block diagram of an example of a combined schedule and block acknowledge transmission, according to one or more embodiments.
FIG. 15 shows a flow diagram of an example of a technique, according to one or more embodiments.
FIG. 16 shows a flow diagram of another example of a technique, according to one or more embodiments.
FIG. 17 shows a block diagram of an example of a computer system, according to one or more embodiments.

### DETAILED DESCRIPTION

Examples in this disclosure relate generally to apparatuses and methods for MU-MIMO. Examples in this disclosure may relate to frequency multiplexing in MU-MIMO.

The Institute of Electrical and Electronics Engineers (IEEE) 802.11ac standard only supports DownLink (DL) Multi-User Multiple Input, Multiple Output (MU-MIMO) and not UpLink (UL) MU-MIMO. There is currently no support for MU frequency multiplexing (e.g., Orthogonal Frequency Division Multiple Access (OFDMA)) in the 802.11 specification.

Discussions in the IEEE HEW study group indicate that support for DL and UL multi-user spatial and frequency multiplexing may be supported in the future. Discussed herein are apparatuses and methods that may support MU frequency or spatial multiplexing in both the UL and DL directions. A specific form of frequency and time multiplexing includes OFDMA, however other techniques of frequency and time multiplexing may be used.

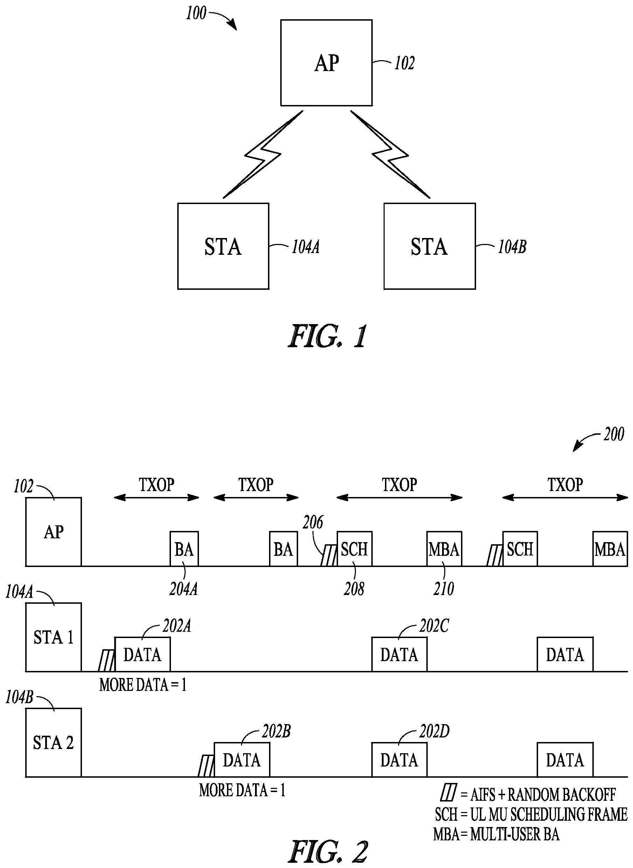

FIG. 1 shows a block diagram of an example of a system 100, according to one or more embodiments. The system 100 may include a wireless device 102 (e.g., a Wireless Local Area Network (WLAN) wireless device, such as a Wireless Fidelity (WiFi) wireless device, or an AP). The system 100 may include a plurality of Stations (STAs) 104A or 104B. The STA 104A-B may be a User Equipment (UE) device. The STA 104A-B may be any communication device (e.g., laptop, desktop computer, Personal Digital Assistant (PDA), phone, or the like), or other device that has the capability to use the protocol detailed herein. The STA 104A-B or the wireless device 102 may be mobile or stationary.

The wireless device 102 may send transmissions to the STA 104A-B and the STA 104A-B may send transmissions to the wireless device 102. The wireless device 102 may send transmissions in a MU-MIMO on a DL. The wireless device 102 may include circuitry to implement UL MU-MIMO operations or frequency multiplexing thereon, such as to provide a MU-MIMO UL and DL, such as with or without frequency multiplexing. Such a configuration may increase the bandwidth for an STA or the number of STAs that may be serviced by the wireless device 102.

In accordance with some HEW embodiments, the wireless device 102 may operate as a master STA which may be arranged to contend for a wireless medium (e.g., during a contention period) to receive exclusive control of the medium for an HEW control period (i.e., a transmission opportunity (TXOP)). The master STA may transmit an HEW master-sync transmission at the beginning of the HEW control period. During the HEW control period, HEW STAs may communicate with the master STA in accordance with a non-contention based multiple access technique. This is unlike conventional Wi-Fi communications in which devices communicate in accordance with a contention-based communication technique, rather than a multiple access technique. During the HEW control period, the master STA may communicate with HEW STAs using one or more HEW frames. During the HEW control period, legacy STAs may refrain from communicating. In some embodiments, the master-sync transmission may be referred to as an HEW control and schedule transmission.

In some embodiments, the multiple-access technique used during the HEW control period may be a scheduled OFDMA technique, although the scope of the embodiments is not limited in this respect. In some embodiments, the multiple access technique may be a Time-Division Multiple Access (TDMA) technique or a Frequency Division Multiple Access (FDMA) technique. The multiple-access technique may include spatial multiplexing.

The master STA may also communicate with legacy STAs in accordance with legacy IEEE 802.11 communication techniques. In some embodiments, the master STA may also be configurable communicate with HEW STAs outside the HEW control period in accordance with legacy IEEE 802.11 communication techniques, although this is not a requirement.

In some embodiments, the links of an HEW frame may be configurable to have the same bandwidth and the bandwidth may be one of 20MHz, 40MHz, 80MHz or 160MHz. In some embodiments, a 320MHz bandwidth may be used. In these embodiments, each link of an HEW frame may be configured for transmitting a number of spatial streams.

FIG. 2 shows a block diagram of an example of a protocol for a UL operation in a MU-MIMO configuration, according to one or more embodiments. The STAs 104A-B may send data to the wireless device 102 using a single user access technique. The conventional technique may include the STA 104A waiting a period of time (e.g., an Arbitration InterFrame Space (AIFS) time 206 plus a random time). The STA 104A may transmit data 202A (e.g., with an indicator that the STA 104A has more queued data to transmit) to the wireless device 102 at a first time and the STA 104B may transmit data 202B (e.g., with an indicator that the STA 104A has more queued data to transmit) to the wireless device 102 at a different time. The wireless device 102 may transmit a Block Acknowledge (BA) 204A after receiving the data 202A-B. The STAs 104A-B may "piggy back" an indication on the data frame that they have additional data queued for transmission. One method for signaling this indication may include using a "More Data" field in a Medium Access Control (MAC) header of a data frame.

The wireless device 102 may recognize that multiple STAs 104A-B have data queued for transmission. To improve access efficiency, the wireless device 102 may transmit a Scheduling Frame (SCH) 208. The SCH may allocate resources to the STAs 104A-B with pending traffic. Resources may include sub-channels (frequency resources) or spatial streams (spatial resources). The STAs 104A-B may use the allocated resources to send data 202C or 202D to the wireless device 102. The wireless device 102 may respond to the data transmission with a Multi-user Block Acknowledge (MBA) 210 indicating whether or not the data 202C-D was received successfully. The MBA 210 may indicate which set(s) of data of the multiple sets of data 202C-D transmitted were received, such as to indicate to the STA 104A-B whether to re-send the data 202C-D.

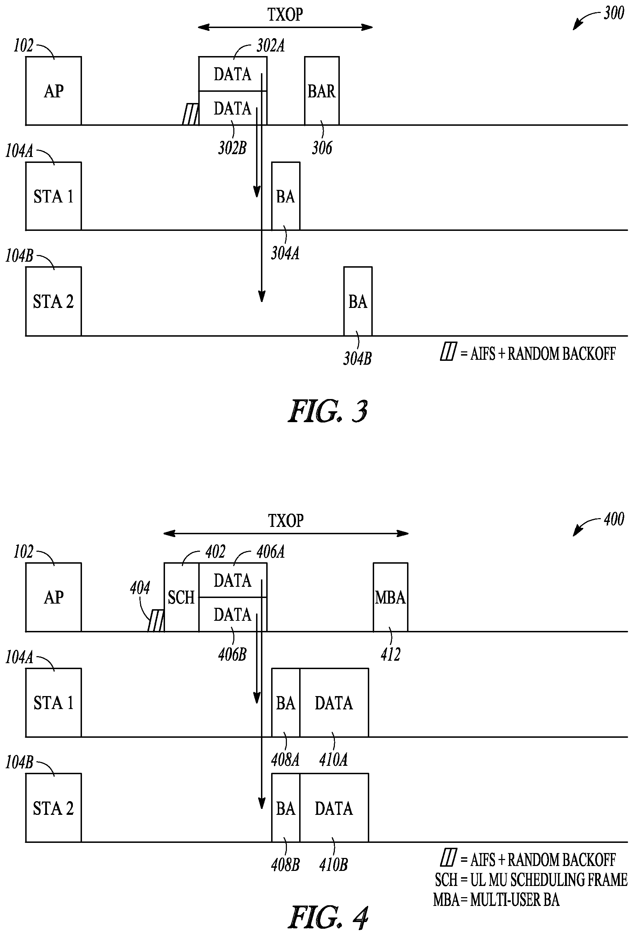

FIG. 3 shows block diagram of an example of a DL operation 300. The wireless device 102 may transmit a Physical Layer Convergence Procedure (PLCP) Protocol Data Unit (PPDU) over one or more subsets of the spatial streams allocated to each STA 104A-B. Following the data 302A or 302B transmission, one STA 104A may respond with an immediate BA 304A response. The other STAs 104B addressed in the MU PPDU may be polled in turn using a Block Acknowledge Request (BAR) frame 306 and return their BA 304B response. This protocol for the 802.11 specification for MU-MIMO may be enhanced, such as to be more efficient, such as is discussed herein.

FIG. 4 shows a block diagram of an example of a DL and UL MU-MIMO communication protocol 400 and for frequency multiplexing the DL and UL MU-MIMO communication, according to one or more embodiments. The communication protocol 400 may support MU frequency multiplexing and spatial multiplexing for both UL and DL.

The wireless device 102 may transmit an SCH 402 on multiple sub-channels (e.g., each sub-channel may be a different frequency band), or across the entire channel, to the STAs 104A-B. The SCH 402 may transmit the SCH 402 after waiting a period of time (e.g., the AIFS plus a random amount of time 404). Data 406A or 406B may be transmitted to a respective STA 104A-B on the sub-channel that the STA 104A-B is communicating with. The SCH 402 and the data 406A-B may be sent in the same message or packet, such as shown in FIG. 4. The STA 104A-B may transmit a BA 408A-B to the wireless device 102, such as in response to receiving the data 406A-B. In the case of a UL, the STA 104A-B may transmit data 410A-B with the BA 408A-B. The BA 408A-B or the data 410A-B maybe transmitted at a time or on a sub-channel or spatial stream consistent with the SCH 402. The wireless device 102 may transmit an MBA 412, such as in response to receiving the data 410A-B.

The following variations, among others, may be included: (1) An SCH may specify spatial or frequency resources for a UL transmission; (2) An SCH may specify a Modulation and Coding Scheme (MCS) or transmit power each STA is to use for a UL transmission; (3) Transmission of an SCH in a separate PPDU from the PPDU carrying the DL data frames and using a legacy compatible format so that legacy STAs may receive it and set their Network Allocation Vector (NAV) for a Transmit (TX) Operation (OP) (jointly TXOP) duration, or if the SCH is separate from the data frame, then SCH and the data frame may each have their own PHY header, if they are not separate then they may share a PHY header; (4) Transmission of multiple SCH in legacy compatible PPDUs, simultaneously, with each in a different sub-channel, such that the SCH contained in each frame applies only to STAs receiving on a respective sub-channel; (5) Transmission of the SCH as part of the same PPDU carrying the DL data frames; (6) Transmission of multiple SCH in the PPDU carrying the DL data frames, where each SCH frame occupies a different set of sub-channels with the schedule in each SCH frame applying to the STAs receiving on those sub-channels; (7) A DL PPDU carrying data frames for different users, where the data frames for a specific user occupy a subset of the sub-channels or spatial streams used by the PPDU; (8) Transmitting in an UL a PPDU from each STA that has been allocated frequency or spatial resources and uses the assigned resources; (9) Including a BA in the UL PPDU, where the BA frame acknowledges data frames received in the DL PPDU; (10) Including zero or more data frames in the UL PPDU; (11) A DL PPDU transmission (i.e., from a wireless device) that carries a single MBA that acknowledges data frames received from multiple STAs; (12) A DL PPDU that includes separate BA, one for each STA that sent a data frame to the wireless device during the uplink phase, where each BA uses separate sub-channels or spatial resources; or (13) A DL PPDU that includes multiple MBA, where each MBA uses sub-channels and spatial streams that are receivable by the STAs that are the intended recipients.

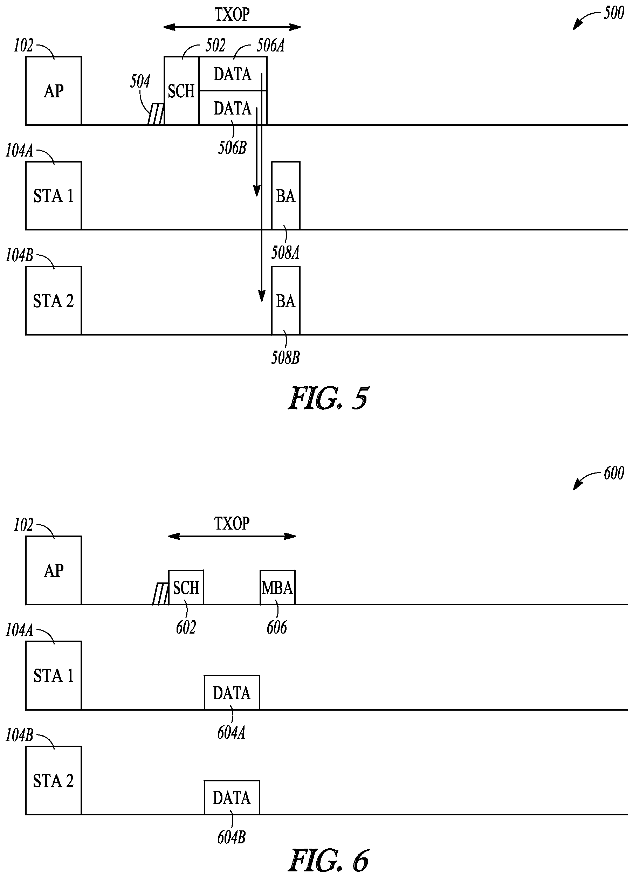

FIG. 5 shows a block diagram of an example of a communication protocol 500 for DL only MU-MIMO frequency multiplexed communication, according to one or more embodiments. The wireless device 102 may transmit a DL SCH 502 to the STA 104A-B, such as after an AIFS plus a random back off time 504. The wireless device 102 may transmit data 506A to the STA 104A on a first sub-channel or spatial stream and data 506B to the STA 104B on a second sub-channel or spatial stream, the second sub-channel or spatial stream different than the first sub-channel or spatial (e.g., a different frequency band than the first sub-channel). The STA 104A may transmit a BA 508A to the wireless device 102 on the first sub-channel or spatial stream and the STA 104B may transmit a BA 508B to the wireless device 102 on the second sub-channel or spatial stream, such as in response to receiving the respective data 506A-B.

FIG. 6 shows a block diagram of an example of a MU MIMO, non-frequency multiplexed, communication protocol 600 for UL only communication, according to one or more embodiments. The wireless device 102 may transmit a UL SCH 602 to the STA 104A-B, such as after an AIFS plus a random back off time. The STA 104A-B may transmit data 604A-B to the wireless device 102, such as at a time consistent with a time indicated by the SCH 602. The wireless device 102 may transmit an MBA 606 to the STA 104A-B, such as in response to receiving the data 604A-B.

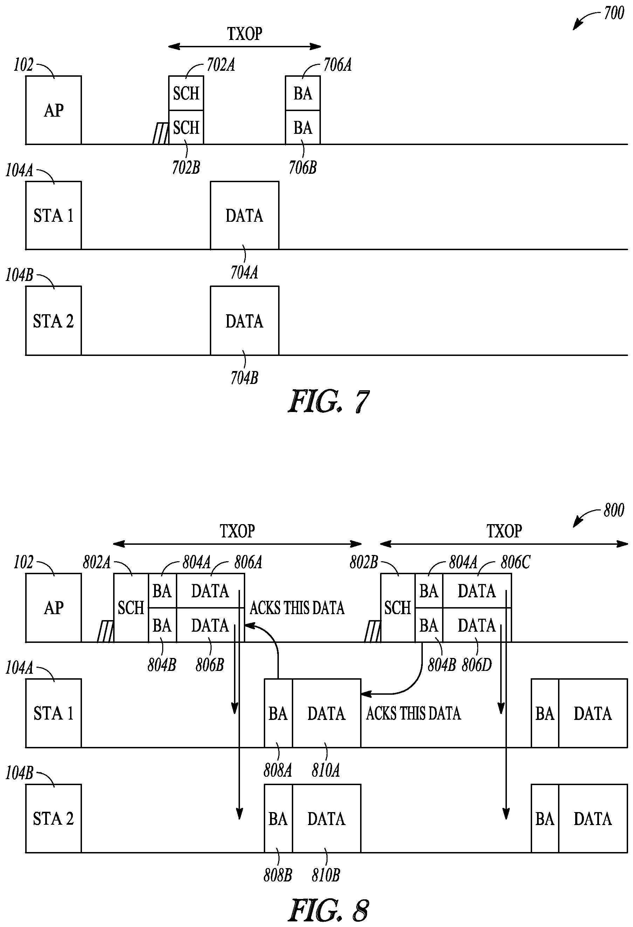

FIG. 7 shows a block diagram of an example of a MU MIMO, frequency multiplexed, communication protocol 700 for UL only communication, according to one or more embodiments. The communication protocol 700 may be similar to the communication protocol 600 with the SCH 702A or 702B transmitted and received on different sub-channels or spatial streams, the data 704A or 704B transmitted on different sub-channels or spatial streams, and a BA 706A or 706B transmitted on different sub-channels or spatial streams. The SCH 702A may be transmitted on the same sub-channel or spatial stream as the data 704A and the BA 706A (the same for the SCH 702B, the data 704B, and the BA 706B).

FIG. 8 shows a block diagram of an example of a MU-MIMO, frequency multiplexed communication protocol 800 for UL and DL communication, according to one or more embodiments. In the example embodiment shown in FIG. 8, the BA 804A, 804B, 804C, or 804D may be added to the next DL PPDU that carries data 806A, 806B, 806C, or 806D to those STAs 104A-B that transmitted data 801A or 810B in a previous UL PPDU. The SCH 802A or 802B may be used for both DL and UL communication. The BA 804A-D may be combined with the SCH 802A-B or the DL data 806A-D. The BA 808A-B may be combined with the UL data 810A-B. While FIG. 8 shows the SCH 802A-B for both UL and DL, the SCH may be used for either DL or UL, or both, such as by using MU-MIMO, frequency multiplexing, or both.

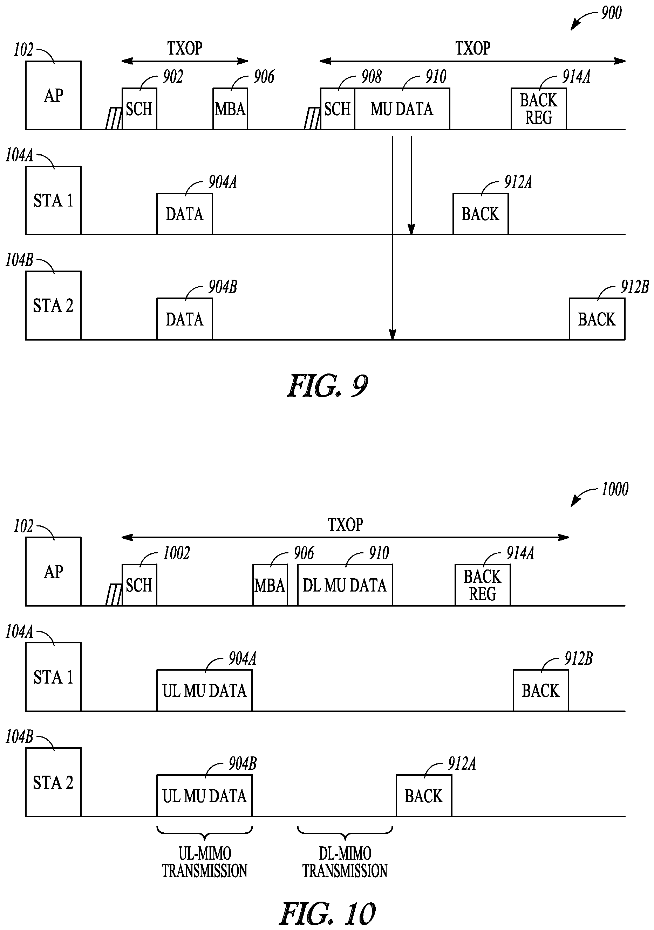

FIG. 9 shows a block diagram of an example of a communication protocol 900 for UL and DL communication, according to one or more embodiments that are not part of the invention.

The communication protocol 900 may include a UL SCH 902 and a separate DL SCH 908. The wireless device 102 may transmit a UL SCH 902 to the STA 104A-B. The UL SCH 902 may be transmitted across the entire channel, such as shown in FIG. 9, or may be split in accord with different sub-channels or spatial streams and the SCH may be transmitted through the respective sub-channel or spatial stream. The data 904A-B may be received by the wireless device 102 on the sub-channel or spatial stream, such as may be indicated to the STA 104A-B by a MAC frame or a preamble. The data 904A-B may be received at a time that is consistent with a time indicated by the SCH 902. The wireless device 102 may transmit an MBA 906 to the STA 104A-B, such as through a transmission across the entire channel or spatial streams or to one or more of the sub-channels or spatial streams, such as the sub-channels or spatial streams that the STA 104A-B is communicating on.

The DL SCH 908 may be transmitted across the entire channel, such as shown in FIG. 9, or may be configured in accord with a respective sub-channel or spatial stream and the SCH may be transmitted through the respective sub-channel or spatial stream. The data 910 may be received by the STA 104A-B on the sub-channel or spatial stream that was used to transmit the data 910. The data 904A-B may be transmitted at a time that is consistent with a time indicated by the SCH 908. The STA 104A may transmit a BA 912A to the wireless device 102, such as by the spatial stream or sub-channel that the data 910 was received on. The wireless device 102 may transmit a BAR 914A to the STA 104A-B, such as through a transmission across the entire channel or spatial stream or to one or more of the sub-channels or spatial streams, such as the sub-channel or spatial stream that the STA 104A-B is communicating on. The STA 104B may transmit a BA 912B to the wireless device 102, such as in response to receiving the BAR 914A.

FIG. 10 shows a block diagram of an example of a communication protocol 1000 for UL and DL communication using a single UL and DL SCH 1002, according to one or more embodiments. The communication protocol 1000 may be similar to the communication protocol 900, with the communication protocol 1000 including an SCH 1002 to schedule both the UL and DL transmissions (i.e. the UL transmission from the STA 104A-B and the DL transmission from the wireless device 102). Note that scheduling may include indicating a time frame in which the wireless device 102 or the STA 104A-B is to monitor a channel, spatial stream, or sub-channel for data.

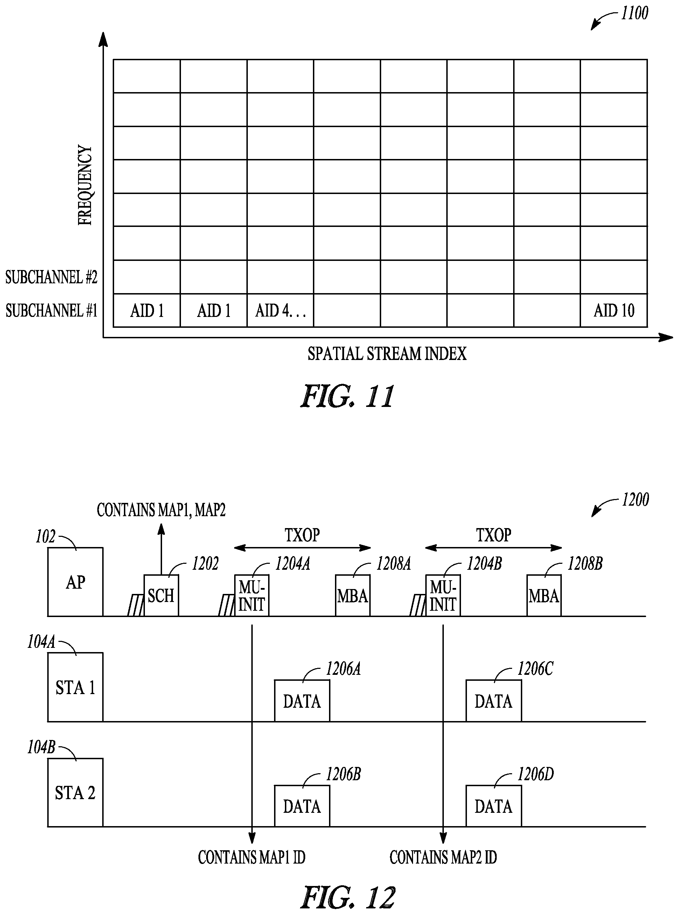

FIG. 11 shows a block diagram of an example of an SCH architecture 1100, according to one or more embodiments. Information contained in an SCH frame include a spatial stream indicator, a sub-channel indicator, MCS, or transmit power for each STA, among others. The spatial stream and sub-channel allocation in the SCH frame may be represented as a two-dimensional map that is divided into spatial streams in one dimension and sub-channels in another dimension.

The Association ID (AID) position in the two-dimensional array (or map) may indicate that that resource (sub-channel associated with that sub-channel index and spatial stream associated with that spatial stream index) is allocated to the STA that was assigned that AID.

The mapping information (map) maybe fragmented into each sub-channel. Each fragment may include information for that sub-channel. The STAs may monitor the map information on the sub-channel(s) assigned to them. The assignment of the sub-channel and the assignment of the spatial stream may be done in a separate configuration frame (e.g., a map Configuration frame).

Transmission of SCH may be non-High Throughput (HT) format, such that legacy stations may detect and set NAV for the TXOP duration. The size (i.e. the number of bits) of the map field may depend on the number of sub-channels or the number of spatial streams available or in use.

The map overhead (number of signaling bits required to send an SCH frame) may be reduced in a variety of ways. The wireless device may transmit map information as long-term configuration information or the map information may be carried in a Beacon or in an SCH, which may be sent periodically, wherein the period may be configured to reduce an amount of times the SCH is sent. In one or more embodiments, another frame (e.g., a MU-initial frame) may be used to initiate MU-MIMO or frequency multiplexed transmission with minimum information in it, such as before a TXOP (e.g., a UL PPDU or DL PPDU), such as in an embodiment in which the SCH is not sent frequently.

FIG. 12 shows a block diagram of an example of a communication protocol 1200 configured to reduce map or SCH overhead, according to one or more embodiments. Multiple maps may be specified in a beacon or SCH 1202 which is not frequently updated or sent. The SCH 1202 may assign a map ID for each map configuration. The wireless device 102 may use another frame (e.g., MU-init 1204A or 1204B) to indicate a map ID (e.g., only a map ID) before the start of a TXOP (e.g., UL or DL PPDU or UL or DL transmission). The STA 104A-B may transmit data 1206A-D consistent with the map ID indicated in the MU-init 1204A-B. The wireless device 102 may transmit an MBA 1208A-B, such as in response to receiving the data 1206A-D.

In one or more embodiments, where multiple maps are specified in a beacon or SCH, the map ID may be optional. For example, if a DL transmission is to be followed by a UL transmission, the SCH may indicate this to the STA and the map ID may not need to be transmitted, such as before the UL transmission.

Different maps may be carried either in the same SCH or separate SCHs, such as different SCHs on separate sub-channels in the case of a frequency multiplexed communication protocol. For example, map may be defined as map Information Element (IE) and one SCH may carry multiple such IEs. The map IE may include a map ID and the corresponding map information.

Based on the map(s) information carried in the SCH frame(s) sent from the wireless device 102, the STAs 104A-B only need to listen to the subset of sub-channels or spatial streams that are assigned to them. The MU-init frame then carries the map ID which tells the STAs 104A-B which map is going to take effect in the next TXOP. The STA 104A-B may decode or transmit packets based on the map ID. The MU-init, in one or more embodiments, does not carry the map information, but only carries map ID, such as to reduce overhead. The MU-init frame may also contain MCS and power transmission information used by the STA 104A-B, or such information may be carried in SCH instead of MU-init frame.

Another way to reduce overhead may include the wireless device sending only the differences in map changes to reduce overhead (e.g., the amount of information to be sent to the STAs 104A-B), such as may be considered a delta SCH.

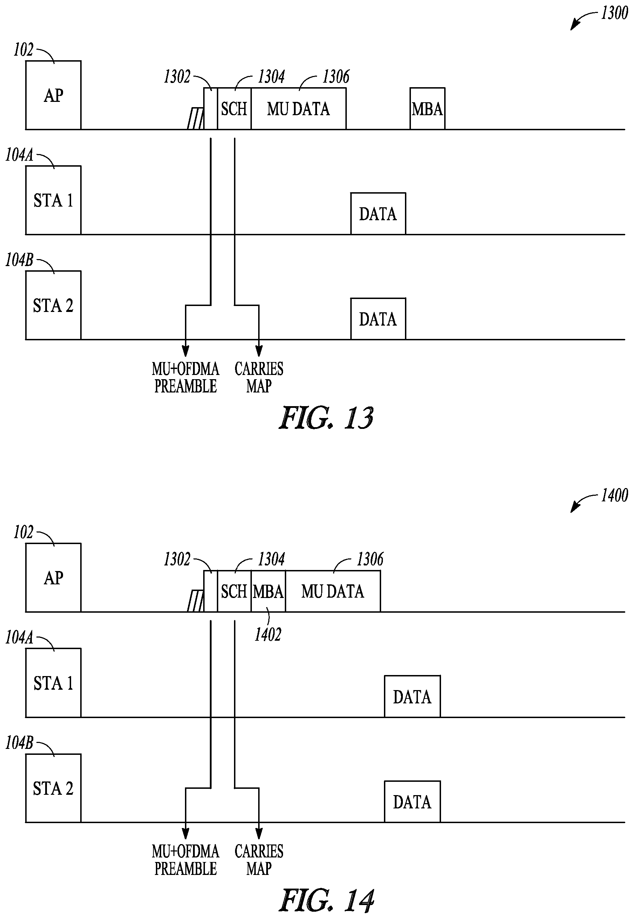

FIG. 13 shows a block diagram of an example of a communication protocol 1300, according to one or more embodiments. The SCH 1304 may be combined with a DL data 1306 multiuser transmission, such as to reduce overhead. In such an embodiment, the map in SCH 1304 may be designed as a new MAC header carrying the map information. The map information may be carried in a preamble 1302 or carried in a MAC header.

FIG. 14 shows a block diagram of an example of a communication protocol 1400, according to one or more embodiments. The communication protocol 1400 is similar to the communication protocol 1300, with the communication protocol 1400 including an MBA 1402 with the preamble 1302, SCH 1304, and DL data 1306. The MBA 1402 may acknowledge receipt of previously transmitted UL data.

Note that the order of the MBA, SCH, DL data, or preamble may be flexible, such as to be in a different position or order than that shown in the FIGS.

The DL ACK for multiple STAs maybe carried in a single frame MBA. The DL ACK may be combined with SCH, such as to reduce overhead. The DL ACK that acknowledges the reception of the UL MU data transmission may be combined with the DL data. Similarly, the UL data may carry the UL ACK that is used to acknowledge the reception of the DL multiuser data transmissions.

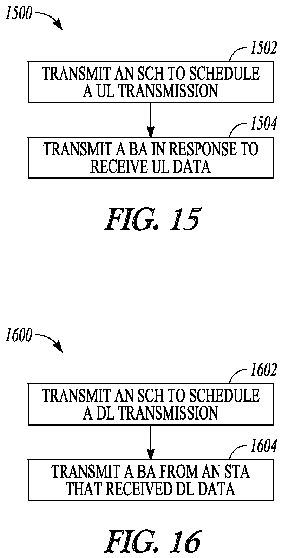

FIG. 15 shows a flow diagram of an example of a method 1500 according to one or more embodiments. At 1502, an SCH may be transmitted to schedule a UL transmission. The SCH may be transmitted from a wireless device or to an STA. The SCH may be transmitted using a plurality of spatial streams or one or more sub-channels. At 1504, a BA may be transmitted in response to receiving UL data, such as from a plurality of STAs. The BA may be transmitted to the STAs using the plurality of spatial streams or one or more sub-channels.

Each sub-channel may include a plurality of spatial streams. Each sub-channel may include or occupy a different frequency band than the other sub-channels. The SCH may indicate to the STA when to monitor a particular sub-channel or spatial stream. The SCH may be divided into a plurality of SCHs, one SCH for each sub-channel or spatial stream. Transmitting the SCH may include transmitting an SCH of the plurality of SCHs on a respective sub-channel or spatial stream that the SCH of the plurality of SCHs is associated with.

The technique 1500 may include transmitting, using the plurality of spatial streams or sub-channels, DL data to the plurality of STAs. Two or more of the SCH, DL data, and BA may be combined into a single frame. The SCH may include a plurality of maps to schedule a plurality of TXOPs. The technique 1500 may include transmitting a map ID frame indicating which map of the plurality of maps a next TXOP is associated with.

FIG. 16 shows a flow diagram of an example of a method 1600, according to one or more embodiments. At 1602, an SCH may be transmitted to schedule a DL transmission. The SCH may be transmitted using a plurality of sub-channels, where each of the sub-channels includes a plurality of spatial streams. The SCH may indicate which respective sub-channel of the plurality of sub-channels and which spatial stream of the respective sub-channel to monitor for the DL transmission. At 1604, a BA may be received from each STA that received DL data. The BA may be received on the respective sub-channel and sub-channel which the SCH indicated the STA is to monitor.

The SCH may include a plurality of maps, each map may include a corresponding map ID. Each map may schedule a different TXOP. Transmitting the SCH may include transmitting a BA with the SCH, the BA acknowledging receipt of previously transmitted DL data. The method 1600 may include transmitting a delta SCH, the delta SCH including only information that has changed since a last SCH or delta SCH transmission.

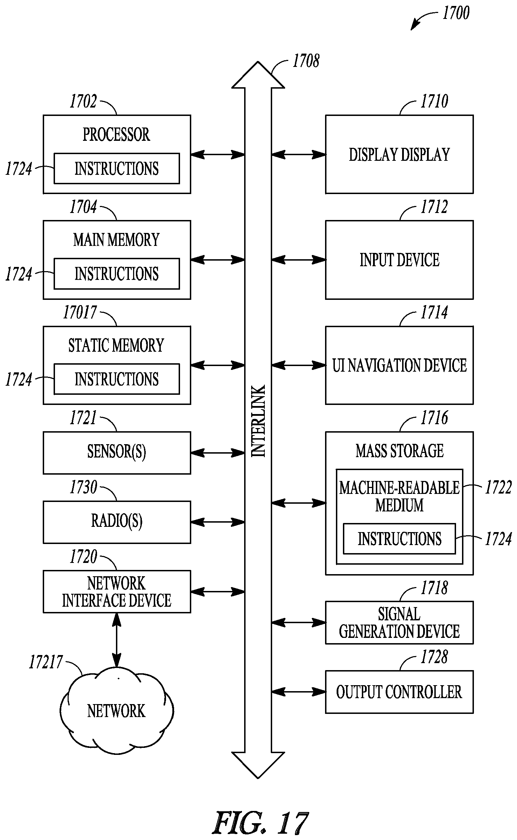

FIG. 17 illustrates a block diagram of an example machine 1700 upon which any one or more of the techniques (e.g., methodologies) discussed herein may perform. In alternative embodiments, the machine 1700 may operate as a standalone device or may be connected (e.g., networked) to other machines. The machine 1700 may be a part of an STA or wireless device as discussed herein. In a networked deployment, the machine 1700 may operate in the capacity of a server machine, a client machine, or both in server-client network environments. In an example, the machine 1700 may act as a peer machine in peer-to-peer (P2P) (or other distributed) network environment. The machine 1700 may be a personal computer (PC), a tablet PC, a set-top box (STB), a personal digital assistant (PDA), a mobile telephone, a web appliance, a network router, switch or bridge, or any machine capable of executing instructions (sequential or otherwise) that specify actions to be taken by that machine, such as a base station. Further, while only a single machine is illustrated, the term "machine" shall also be taken to include any collection of machines that individually or jointly execute a set (or multiple sets) of instructions to perform any one or more of the methodologies discussed herein, such as cloud computing, software as a service (SaaS), other computer cluster configurations.

Examples, as described herein, may include, or may operate on, logic or a number of components, modules, or mechanisms. Modules are tangible entities (e.g., hardware) capable of performing specified operations when operating. A module includes hardware. In an example, the hardware may be specifically configured to carry out a specific operation (e.g., hardwired). In an example, the hardware may include configurable execution units (e.g., transistors, circuits, etc.) and a computer readable medium containing instructions, where the instructions configure the execution units to carry out a specific operation when in operation. The configuring may occur under the direction of the executions units or a loading mechanism. Accordingly, the execution units are communicatively coupled to the computer readable medium when the device is operating. In this example, the execution units may be a member of more than one module. For example, under operation, the execution units may be configured by a first set of instructions to implement a first module at one point in time and reconfigured by a second set of instructions to implement a second module.

Machine (e.g., computer system) 1700 may include a hardware processor 1702 (e.g., a central processing unit (CPU), a graphics processing unit (GPU), a hardware processor core, or any combination thereof), a main memory 1704 and a static memory 1706, some or all of which may communicate with each other via an interlink (e.g., bus) 1708. The machine 1700 may further include a display unit 1710, an alphanumeric input device 1712 (e.g., a keyboard), and a user interface (UI) navigation device 1714 (e.g., a mouse). In an example, the display unit 1710, input device 1712 and UI navigation device 1714 may be a touch screen display. The machine 1700 may additionally include a storage device (e.g., drive unit) 1716, a signal generation device 1718 (e.g., a speaker), a network interface device 1720, and one or more sensors 1721, such as a global positioning system (GPS) sensor, compass, accelerometer, or other sensor. The machine 1700 may include an output controller 1728, such as a serial (e.g., universal serial bus (USB), parallel, or other wired or wireless (e.g., infrared (IR), near field communication (NFC), etc.) connection to communicate or control one or more peripheral devices (e.g., a printer, card reader, etc.). The machine 1700 may include one or more radios 1730 (e.g., transmission, reception, or transceiver devices). The radios 1730 may include one or more antennas to receive signal transmissions. The radios 1730 may be coupled to or include the processor 1702. The processor 1702 may cause the radios 1730 to perform one or more transmit or receive operations. Coupling the radios 1730 to such a processor may be considered configuring the radio 1730 to perform such operations.

The storage device 1716 may include a machine readable medium 1722 on which is stored one or more sets of data structures or instructions 1724 (e.g., software) embodying or utilized by any one or more of the techniques or functions described herein. The instructions 1724 may also reside, completely or at least partially, within the main memory 1704, within static memory 1706, or within the hardware processor 1702 during execution thereof by the machine 1700. In an example, one or any combination of the hardware processor 1702, the main memory 1704, the static memory 1706, or the storage device 1716 may constitute machine readable media.

While the machine readable medium 1722 is illustrated as a single medium, the term "machine readable medium" may include a single medium or multiple media (e.g., a centralized or distributed database, and/or associated caches and servers) configured to store the one or more instructions 1724.

The term "machine readable medium" may include any medium that is capable of storing, encoding, or carrying instructions for execution by the machine 1700 and that cause the machine 1700 to perform any one or more of the techniques of the present disclosure, or that is capable of storing, encoding or carrying data structures used by or associated with such instructions. Nonlimiting machine readable medium examples may include solid-state memories, and optical and magnetic media. Specific examples of machine readable media may include: non-volatile memory, such as semiconductor memory devices (e.g., Electrically Programmable Read-Only Memory (EPROM), Electrically Erasable Programmable Read-Only Memory (EEPROM)) and flash memory devices; magnetic disks, such as internal hard disks and removable disks; magneto-optical disks; and CD-ROM and DVD-ROM disks.

The instructions 1724 may further be transmitted or received over a communications network 1726 using a transmission medium via the network interface device 1720 utilizing any one of a number of transfer protocols (e.g., frame relay, internet protocol (IP), transmission control protocol (TCP), user datagram protocol (UDP), hypertext transfer protocol (HTTP), etc.). Example communication networks may include a local area network (LAN), a wide area network (WAN), a packet data network (e.g., the Internet), mobile telephone networks (e.g., cellular networks), Plain Old Telephone (POTS) networks, and wireless data networks (e.g., Institute of Electrical and Electronics Engineers (IEEE) 802.11 family of standards known as Wi-Fi^{®}, IEEE 802.16 family of standards known as WiMax^{®}), IEEE 802.15.4 family of standards, peer-to-peer (P2P) networks, among others. In an example, the network interface device 1720 may include one or more physical jacks (e.g., Ethernet, coaxial, or phone jacks) or one or more antennas to connect to the communications network 1726. In an example, the network interface device 1720 may include a plurality of antennas to wirelessly communicate using at least one of single-input multiple-output (SIMO), multiple-input multiple-output (MIMO), or multiple-input single-output (MISO) techniques. The term "transmission medium" shall be taken to include any intangible medium that is capable of storing, encoding or carrying instructions for execution by the machine 1700, and includes digital or analog communications signals or other intangible medium to facilitate communication of such software.

The above detailed description includes references to the accompanying drawings, which form a part of the detailed description. The drawings show, by way of illustration, specific embodiments in which methods, apparatuses, and systems discussed herein may be practiced. These embodiments are also referred to herein as "examples." Such examples may include elements in addition to those shown or described. However, the present inventors also contemplate examples in which only those elements shown or described are provided. Moreover, the present inventors also contemplate examples using any combination or permutation of those elements shown or described (or one or more aspects thereof), either with respect to a particular example (or one or more aspects thereof), or with respect to other examples (or one or more aspects thereof) shown or described herein.

In this document, the terms "a" or "an" are used, as is common in patent documents, to include one or more than one, independent of any other instances or usages of "at least one" or "one or more." In this document, the term "or" is used to refer to a nonexclusive or, such that "A or B" includes "A but not B," "B but not A," and "A and B," unless otherwise indicated. In this document, the terms "including" and "in which" are used as the plain-English equivalents of the respective terms "comprising" and "wherein." Also, in the following claims, the terms "including" and "comprising" are open-ended, that is, a system, device, article, composition, formulation, or process that includes elements in addition to those listed after such a term in a claim are still deemed to fall within the scope of that claim. Moreover, in the following claims, the terms "first," "second," and "third," etc. are used merely as labels, and are not intended to impose numerical requirements on their objects.

As used herein, a "-" (dash) used when referring to a reference number means "or", in the non-exclusive sense discussed in the previous paragraph, of all elements within the range indicated by the dash. For example, 103A-B means a nonexclusive "or" of the elements in the range {103A, 103B}, such that 103A-103B includes "103A but not 103B", "103B but not 103A", and "103A and 103B".

The above description is intended to be illustrative, and not restrictive. For example, the above-described examples (or one or more aspects thereof) may be used in combination with each other. Other embodiments may be used, such as by one of ordinary skill in the art upon reviewing the above description. The Abstract is provided to comply with 37 C.F.R. § 1.72(b), to allow the reader to quickly ascertain the nature of the technical disclosure. It is submitted with the understanding that it will not be used to interpret or limit the scope or meaning of the claims. Also, in the above Detailed Description, various features may be grouped together to streamline the disclosure. This should not be interpreted as intending that an unclaimed disclosed feature is essential to any claim. Rather, inventive subject matter may lie in less than all features of a particular disclosed embodiment. Thus, the following claims are hereby incorporated into the Detailed Description as examples or embodiments, with each claim standing on its own as a separate embodiment, and it is contemplated that such embodiments may be combined with each other in various combinations or permutations. The scope of the invention is determined by the appended claims.

## Claims

1. A wireless device (102) comprising a transceiver configured to:
transmit, over a plurality of spatial streams and a plurality of sub-channels, a Schedule frame, SCH, to a plurality of Stations, STAs (104A, 104B), to schedule an Uplink, UL, transmission;
wherein each sub-channel of the plurality of sub-channels occupies a different frequency band and is allocated a spatial stream of the plurality of spatial streams;
wherein the SCH includes a plurality of maps (1100), each map scheduling a different Transmit Operation, TXOP, and associating at least one sub-channel and at least one spatial stream with an Association ID, AID;
wherein each map indicates to an STA (104A, 104B) to which a respective AID was assigned, which of the at least one sub-channels and which of the at least one spatial streams are allocated to the STA (104A, 104B) during the TXOP;
transmit, over the plurality of spatial streams, a Block Acknowledge, BA, to the plurality of STAs (104A, 104B), in response to receiving data from the plurality of STAs (104A, 104B);
transmit, over the plurality of spatial streams and sub-channels, Downlink, DL, data to the plurality of STAs (104A, 104B) at a time indicated in the SCH; and
transmit, before the UL transmission or transmitting the DL data, a map Identification, ID, frame indicating which map of the plurality of maps (1100) a next transmit operation is associated with.

2. The wireless device (102) of claim 1, wherein the SCH is divided into a plurality of SCHs, one SCH for each sub-channel of the plurality of sub-channels, and wherein the transceiver is configured to transmit each SCH on a respective sub-channel and to transmit the plurality of SCHs.

3. The wireless device (102) of claim 1, wherein the transceiver is configured to transmit a Block Acknowledge, BA, in a same frame as the SCH, the BA acknowledging that previously transmitted Uplink, UL, transmission was received.

4. The wireless device (102) of claim 1, wherein the transceiver is configured to transmit two or more of the SCH, DL data, and BA in a single frame.

5. The wireless device (102) of claim 1 wherein a transmit operation of the transmit operations includes a DL transmission followed by a UL transmission, and wherein the DL transmission indicates a map ID indicating which map of the plurality of maps (1100) a next transmit operation is associated with.

6. The wireless device (102) of claim 1, wherein the transceiver is configured to transmit a delta SCH to the plurality of STAs (104A, 104B) to alter the SCH, the delta SCH indicating one or more changes to the SCH.

7. A wireless device (102) comprising a transceiver configured to:
transmit, over a plurality of spatial streams and a plurality of sub-channels, a Schedule frame, SCH, to a plurality of Stations, STAs (104A, 104B), to schedule a Downlink, DL, transmission;
wherein each sub-channel of the plurality of sub-channels occupies a different frequency band and is allocated spatial streams of the plurality of spatial streams;
wherein the SCH includes a plurality of maps (1100), each map scheduling a different Transmit Operation, TXOP, and associating at least one sub-channel and at least one spatial stream with an Association ID, AID;
wherein each map indicates to an STA (104A, 104B) to which a respective AID was assigned, which of the at least one sub-channels and which of the at least one spatial stream are allocated to the STA (104A, 104B) during the TXOP; and
transmit, before the DL transmission, a map Identification, ID, frame indicating which map of the plurality of maps (1100) a next transmit operation is associated with.

8. The wireless device (102) of claim 7, wherein the transceiver is configured to transmit a Block Acknowledge, BA, in a same frame as the SCH, the BA acknowledging that previously transmitted Uplink, UL, transmission was received.

9. The wireless device (102) of claim 7, wherein the transceiver is configured to transmit a delta SCH to the STAs (104A, 104B) to alter the SCH, the delta SCH indicating one or more changes to the SCH.

## Patentansprüche

1. Ein drahtloses Gerät (102), das einen Transceiver umfasst, der konfiguriert ist, um:
über eine Vielzahl von räumlichen Strömen und eine Vielzahl von Unterkanälen einen Zeitplanrahmen, SCH, an eine Vielzahl von Stationen, STAs (104A, 104B), zu übertragen, um eine Uplink, UL, -Übertragung zu planen;
wobei jeder Unterkanal der Vielzahl von Unterkanäle ein unterschiedliches Frequenzband belegt und einem räumlichen Strom der Vielzahl von räumlichen Strömen zugeordnet ist;
wobei der SCH eine Vielzahl von Karten (1100) enthält, wobei jede Karte eine andere Sendeoperation, TXOP, plant und mindestens einen Unterkanal und mindestens einen räumlichen Strom mit einer Assoziations-ID, AID, verknüpft;
wobei jede Karte einer STA (104A, 104B), der eine entsprechende AID zugewiesen wurde, anzeigt, welche der mindestens einen Unterkanäle und welche der mindestens einen räumlichen Ströme der STA (104A, 104B) während des TXOP zugewiesen sind;
als Reaktion auf den Empfang von Daten von der Vielzahl von STAs (104A, 104B) eine Blockbestätigung, BA, über die Vielzahl von räumlichen Strömen an die Vielzahl von STAs (104A, 104B) zu senden;
Downlink, DL, Daten über die Vielzahl von räumlichen Strömen und Unterkanälen an die Vielzahl von STAs (104A, 104B) zu einer in dem SCH angegebenen Zeit zu übertragen; und
vor der UL-Übertragung oder der Übertragung der DL-Daten einen Map-Identification, ID, -Rahmen zu senden, der anzeigt, welche Karte aus der Vielzahl von Karten (1100) ein nächster Sendevorgang zugeordnet ist.

2. Das drahtlose Gerät (102) nach Anspruch 1, wobei der SCH in eine Vielzahl von SCHs unterteilt ist, ein SCH für jeden Unterkanal der Vielzahl von Unterkanälen, und wobei der Transceiver konfiguriert ist, jeden SCH auf einem jeweiligen Unterkanal zu übertragen und die Vielzahl von SCHs zu übertragen.

3. Das drahtlose Gerät (102) nach Anspruch 1, wobei der Transceiver konfiguriert ist, eine Blockbestätigung, BA, in einem gleichen Rahmen wie dem SCH zu senden, wobei die BA bestätigt, dass die zuvor gesendete Uplink, UL, - Übertragung empfangen wurde.

4. Das drahtlose Gerät (102) nach Anspruch 1, wobei der Transceiver konfiguriert ist, zwei oder mehr der SCH, DL-Daten und BA in einem einzigen Rahmen zu übertragen.

5. Das drahtlose Gerät (102) nach Anspruch 1, wobei ein Sendevorgang der Sendevorgänge eine DL-Übertragung gefolgt von einer UL-Übertragung umfasst, und wobei die DL-Übertragung eine Karten-ID anzeigt, die angibt, welcher Karte aus der Vielzahl von Karten (1100) ein nächster Sendevorgang zugeordnet ist.

6. Das drahtlose Gerät (102) nach Anspruch 1, wobei der Transceiver konfiguriert ist, einen Delta-SCH an die Vielzahl von STAs (104A, 104B) zu senden, um den SCH zu ändern, wobei der Delta-SCH eine oder mehrere Änderungen an dem SCH anzeigt.

7. Ein drahtloses Gerät (102), das einen Transceiver umfasst, der konfiguriert ist, um:
über eine Vielzahl von räumlichen Strömen und eine Vielzahl von Unterkanälen einen Zeitplanrahmen, SCH, an eine Vielzahl von Stationen, STAs (104A, 104B), zu senden, um eine Downlink, DL, -Übertragung zu planen;
wobei jeder Unterkanal der Vielzahl von Unterkanälen ein unterschiedliches Frequenzband belegt und einem räumlichen Strom der Vielzahl von räumlichen Strömen zugeordnet ist;
wobei der SCH eine Vielzahl von Karten (1100) enthält, wobei jede Karte eine unterschiedliche Sendeoperation, TXOP, plant und mindestens einen Unterkanal und mindestens einen räumlichen Strom mit einer Assoziations-ID, AID, verknüpft;
wobei jede Karte einer STA (104A, 104B), der eine entsprechende AID zugewiesen wurde, anzeigt, welche der mindestens einen Unterkanäle und welche des mindestens einen räumlichen Stroms der STA (104A, 104B) während des TXOP zugewiesen sind; und
vor der DL-Übertragung einen Kartenidentifizierungs, ID, -Rahmen zu senden, der anzeigt, welcher Karte aus der Vielzahl von Karten (1100) ein nächster Sendevorgang zugeordnet ist.

8. Das drahtlose Gerät (102) nach Anspruch 7, wobei der Transceiver konfiguriert ist, eine Blockbestätigung, BA, in einem gleichen Rahmen wie der SCH zu senden, wobei die BA bestätigt, dass die zuvor gesendete Uplink, UL, -Übertragung empfangen wurde.

9. Das drahtlose Gerät (102) nach Anspruch 7, wobei der Transceiver konfiguriert ist, einen Delta-SCH an die STAs (104A, 104B) zu senden, um den SCH zu ändern, wobei der Delta-SCH eine oder mehrere Änderungen an dem SCH anzeigt.

## Revendications

1. Dispositif sans fil (102) comprenant un émetteur-récepteur configuré pour:
transmettre, au moyen d'une pluralité de flux spatiaux et une pluralité de sous-canaux, une trame de planification, SCH, à une pluralité de stations, STA (104A, 104B), pour planifier une transmission en liaison montante, UL;
dans lequel chaque sous-canal de la pluralité de sous-canaux occupe une bande de fréquences différente et est attribué à un flux spatial de la pluralité des flux spatiaux;
dans lequel la SCH comprend une pluralité de cartes (1100), chaque carte planifiant une opération de transmission différente, TXOP, et associant au moins un sous-canal et au moins un flux spatial à un ID d'association, AID;
dans lequel chaque carte indique une STA (104A, 104B) à laquelle est attribué un AID respectif, dont les au moins un sous-canaux et dont les au moins un flux spatiaux sont attribués à la STA (104A, 104B) pendant la TXOP;
transmettre, au moyen de la pluralité de flux spatiaux, un accusé de réception de bloc, BA, à la pluralité de STA (104A, 104B), en réponse à la réception de données en provenance de la pluralité de STA (104A, 104B);
transmettre, au moyen de la pluralité de flux spatiaux et de sous-canaux, des données descendantes, DL, à la pluralité de STA (104A, 104B) à un moment indiqué dans la SCH; et
transmettre, avant la transmission UL ou la transmission de données DL, à une trame d'identification, ID, de carte, indiquant la carte parmi la pluralité de cartes (1100) à laquelle est associée une prochaine opération de transmission.

2. Dispositif sans fil (102) selon la revendication 1, dans lequel la SCH est divisée en une pluralité de SCH, une SCH pour chaque sous-canal de la pluralité de sous-canaux, et dans lequel l'émetteur-récepteur est configuré pour transmettre chaque SCH sur un sous-canal respectif et pour transmettre la pluralité de SCH.

3. Dispositif sans fil (102) selon la revendication 1, dans lequel l'émetteur-récepteur est configuré pour transmettre un accusé de réception de bloc, BA, dans une même trame que la SCH, le BA accusant réception que la transmission en liaison montante UL transmise précédemment a été reçue.

4. Dispositif sans fil (102) selon la revendication 1, dans lequel l'émetteur-récepteur est configuré pour transmettre deux ou plus parmi la SCH, les données DL et le BA dans une seule trame.

5. Dispositif sans fil (102) selon la revendication 1, dans lequel une opération de transmission parmi les opérations de transmission comprend une transmission DL suivie par une transmission UL et dans lequel la transmission DL indique un ID de carte indiquant la carte parmi la pluralité de cartes (1100) à laquelle est associé une prochaine opération de transmission.

6. Dispositif sans fil (102) selon la revendication 1, dans lequel l'émetteur-récepteur est configuré pour transmettre une SCH delta à la pluralité de STA (104A, 104B) pour modifier la SCH, la SCH delta indiquant une ou plusieurs modifications de la SCH.

7. Dispositif sans fil (102) comprenant un émetteur-récepteur configuré pour:
transmettre, au moyen d'une pluralité de flux spatiaux et une pluralité de sous-canaux, une trame de planification, SCH, à une pluralité de stations, STA (104A, 104B), pour planifier une transmission en liaison descendante, DL;
dans lequel chaque sous-canal de la pluralité de sous-canaux occupe une bande de fréquences différente et est attribué à un flux spatial de la pluralité des flux spatiaux;
dans lequel la SCH comprend une pluralité de cartes (1100), chaque carte planifiant une opération de transmission différente, TXOP, et associant au moins un sous-canal et au moins un flux spatial à un ID d'association, AID;
dans lequel chaque carte indique une STA (104A, 104B) à laquelle est attribué un AID respectif, dont les au moins un sous-canaux et dont les au moins un flux spatiaux sont attribués à la STA (104A, 104B) pendant la TXOP; et
transmettre, avant la transmission DL, une trame d'identification de carte, ID indiquant la carte parmi la pluralité de cartes (1100) à laquelle est associée une prochaine opération de transmission.

8. Dispositif sans fil (102) selon la revendication 7, dans lequel l'émetteur-récepteur est configuré pour transmettre un accusé de réception de bloc, BA, dans une même trame que la SCH, le BA accusant réception que la transmission en liaison montante UL transmise précédemment a été reçue.

9. Dispositif sans fil (102) selon la revendication 7, dans lequel l'émetteur-récepteur est configuré pour transmettre une SCH delta aux STA (104A, 104B) pour modifier la SCH, la SCH delta indiquant une ou plusieurs modifications de la SCH.
